# EUROPÄISCHE PATENTSCHRIFT

(11) **EP 3 810 505 B1**
(45) Veröffentlichungstag und Bekanntmachung des Hinweises auf die Patenterteilung: **06.03.2024**
(21) Anmeldenummer: 19731197.0
(22) Anmeldetag: 11.06.2019
(51) Int. Cl.: B64C 27/12, B64C 27/14

(54) **DREHFLÜGLER MIT EINEM ELEKTRISCHEN ANTRIEB ZUM ANTREIBEN EINES HAUPT- UND / ODER HECKROTORS DES DREHFLÜGLERS**
ROTORCRAFT HAVING AN ELECTRIC DRIVE FOR DRIVING A MAIN AND/OR TAIL ROTOR OF THE ROTORCRAFT
GIRAVION ÉQUIPÉ D'UN ENTRAÎNEMENT ÉLECTRIQUE POUR ENTRAÎNER UN ROTOR PRINCIPAL ET/OU UN ROTOR ANTICOUPLE DU GIRAVION

(30) Priorität: 25.06.2018 CH 8002018; 19.10.2018 CH 12762018
(43) Veröffentlichungstag der Anmeldung: 28.04.2021
(60) Teilanmeldung: 22153293.0
(73) Patentinhaber: kopter group ag, 8753 Mollis (CH)
(72) Erfinder: HETTENKOFER, Johannes, 85521 Ottobrunn (DE); DUMMEL, Andreas, 85662 Hohenbrunn (DE); EVEN, Detlev, 85635 Höhenkirchen-Siegertsbrunn (DE); LÖWENSTEIN, Andreas, 8620 Wetzikon (CH)
(74) Vertreter: Keller Schneider Patent- und Markenanwälte AG
(86) Internationale Anmeldenummer: PCT/EP2019/065161
(87) Internationale Veröffentlichungsnummer: WO 2020/001970

(56) Entgegenhaltungen:
- EP-A1- 2 551 190
- EP-A1- 3 412 566
- WO-A1-2016/030168
- DE-A1-102010 021 024

## Beschreibung

### Technisches Gebiet

Die vorliegende Erfindung beschreibt einen Drehflügler mit einem elektrischen Antrieb zum Antreiben eines Haupt- und / oder Heckrotors des Drehflüglers gemäss Oberbegriff des ersten Patentanspruches.

Im Weiteren beschreibt die vorliegende Erfindung einen Drehflügler mit einem Hybridantrieb zum Antreiben eines Haupt- und / oder Heckrotors des Drehflüglers umfassend den erfindungsgemässen, elektrischen Antrieb sowie einen zweiten, als thermodynamische Kraftmaschine ausgestalteten, Antrieb.

### Stand der Technik

Bekannt sind aus dem Stand der Technik so genannte mehrmotorige, insbesondere zweimotorige Helikopter, d.h. Helikopter mit einem Antriebssystem umfassend mehrere Motoren beziehungsweise Antriebe. Typischerweise wird ein Kraftstoff, meist fossile Brennstoffe, anhand eines oder mehrerer als thermodynamische Kraftmaschine ausgestalteten Antriebe in mechanische Arbeit umgewandelt und über ein Hauptrotorgetriebe beziehungsweise Helikopterrotorgetriebe der Hauptrotor beziehungsweise über ein Heckrotorgetriebe der Heckrotor angetrieben.

In einem Notfall in Form eines Ausfalls eines Antriebs eines solchen mehrmotorigen Helikopters, muss der Helikopter sich für eine vorbestimmte Dauer auf die Leistung von dem weiteren verbleibenden Motor verlassen können, um den Helikopter in ein sicheres Flugregime zu versetzen und auf den Motorausfall zu reagieren.

Auch wenn keine Notfallsituation gegeben ist, hat ein mehrmotoriger Helikopter den Vorteil, dass durch die Leistung eines weiteren Motors während des Fluges beispielsweise eine verbesserte Traglastfähigkeit gewährleistet werden kann.

Eine Sonderform solcher zweimotoriger Helikopter sind ebenfalls aus dem Stand der Technik bekannte Helikopter mit einem Hybridantrieb, wobei nebst einem als thermodynamische Kraftmaschine ausgestalteten Antrieb durch einen elektrischen Antrieb sowie eine zugehörige elektrische Energiequelle zusätzliche, mechanische Arbeit verrichtet werden kann. Solche Helikopter mit einem Hybridantrieb bieten einen zusätzlichen Sicherheitsvorteil gegenüber zweimotorigen Helikoptern einzig mit fossiler Brennstoffversorgung, da beispielsweise bei Ausfall der fossilen Brennstoffversorgung auf die zusätzliche elektrische Energieversorgung zurückgegriffen werden kann.

Im Weiteren ist aus dem Dokument US 2017/0225573 A1 ein Hybridantrieb mit einem als thermodynamische Kraftmaschine ausgestalteten Antrieb sowie einem elektrischen Antrieb bekannt. Der Hybridantrieb umfasst einen durch die thermodynamische Kraftmaschine ausgebildeten Hauptantrieb sowie einen durch den elektrischen Antrieb ausgebildeten Hilfsantrieb. Der Hauptantrieb umfasst einen als thermodynamische Kraftmaschine ausgestalteten Antrieb, ein Hauptrotorgetriebe bzw. Helikopterrotorgetriebe, einen Antriebsstrang bzw. Hauptmotorwelle, sowie eine Hauptrotorwelle beziehungsweise einen Hauptrotormast. Hierbei ist der Hauptantrieb mechanisch verbunden mit der Hauptmotorwelle, wodurch die Hauptmotorwelle in Rotation versetzbar ist. Im Weiteren ist die Hauptmotorwelle derart über das Hauptrotorgetriebe mit der fest mit dem Hauptrotor verbundenen Hauptrotorwelle verbunden, so dass der Hauptrotor in Rotation versetzbar ist.

Der Hilfsantrieb umfasst eine zusätzliche elektrische Energiequelle, einen elektrischen Antrieb, sowie einen Antriebsstrang bzw. eine zugehörige Motorwelle. Die elektrische Energiequelle liefert die notwendige Energie für den elektrischen Antrieb.

Die EP 3 412 566 A1 offenbart einen elektromotorischen Hybridantrieb für Luftfahrzeuge, bei dem eine elektrische Maschine die Ausgangsleistung einer Gasturbine steigern oder reduzieren kann.

Dabei kann gemäss einer in der US 2017/0225573 A1 vorgeschlagenen Ausführungsform der elektrische Antrieb über die zugehörige Motorwelle mit der Hauptrotorwelle bzw. dem Hauptrotormast in einer mechanischen Wirkverbindung stehen, wobei der elektrische Antrieb und die Motorwelle parallel zum Rotormast angeordnet sind.

Der aus dem Dokument US 2017/0225573 A1 bekannte Drehflügler mit einem Hybridantrieb hat den Nachteil, dass ein hoher Platzbedarf, eine komplexe Bauweise sowie ein hoher Wartungsbedarf resultiert.

Aufgrund des Vorhandenseins zweiter Motoren haben solche, beispielsweise in US 2017/0225573 A1 gezeigte, Hybridantriebe das grundlegende Problem, dass sich das Gewicht des Drehflüglers gegenüber einmotorigen Varianten nachteilig erhöht, jedoch wird eine höhere Sicherheitsstufe erreicht.

Aus den Offenlegungsschriften EP 3 412 566 A1, WO 2016/030168 A1, und DE 10 2010 021 024 A1 sind verschiedene Ausführungsformen eines elektrischen Antriebs für Luftfahrzeuge bekannt.

### Darstellung der Erfindung

Die vorliegende Erfindung hat sich zur Aufgabe gestellt, einen Drehflügler mit einem elektrischen Antrieb bereitzustellen, wobei die Nachteile des Standes der Technik überwunden werden und insbesondere der Platzbedarf reduziert, die Bauweise vereinfacht und der Wartungsbedarf verringert werden.

Eine weitere Aufgabe der vorliegenden Erfindung besteht darin, einen Drehflügler mit einem Hybridantrieb umfassend den elektrischen Antrieb bereitzustellen, wobei die Nachteile des Standes der Technik durch eine kompakte und gewichtsarme Bauweise überwunden werden.

Diese Aufgabe erfüllt ein Drehflügler mit einem elektrischen Antrieb mit den Merkmalen des Patentanspruches 1 beziehungsweise ein Drehflügler mit einem Hybridantrieb mit den Merkmalen des Patentanspruches 7.

Erfindungsgemäss ist der elektrische Antrieb als elektrischer Ringmotor ausgestaltet, wobei der elektrische Ringmotor koaxial zum Rotormast angeordnet und angebracht ist.

Im Sinne der vorliegenden Erfindung wird unter einem elektrischen Ringmotor ein so genannter Torquemotor mit einer Hohlwelle verstanden. Beim Motortyp elektrischer Ringmotor wird somit auf eine mittig angeordnete Motorwelle verzichtet. Ein elektrischer Ringmotor umfasst im Wesentlichen einen als Stator dienenden sowie einen als Rotor dienenden Ring, wobei der elektrische Ringmotor bei einem äusseren Rotor als "Aussenläufer" und bei einem inneren Rotor als "Innenläufer" bezeichnet wird.

Die Kraftwirkung entsteht beim vorliegenden elektrischen Ringmotor im Luftspalt beziehungsweise Magnetspalt zwischen Rotor und Stator.

Solche elektrischen Ringmotoren haben gegenüber konventionellen Elektromotoren mit einer Motorwelle den Vorteil, dass aufgrund eines grossen Antriebsmoments bei geringer Drehzahl grosse Beschleunigungen ermöglicht werden. Da im Weiteren keine mechanischen Elemente wie Zahnriemen etc. notwendig sind, kann durch die Verwendung von elektrischen Ringmotoren eine kompakte Bauweise erzielt werden. Mit anderen Worten ist ein elektrischer Ringmotor besonders kompakt integrierbar in ein bestehendes Antriebssystem eines Drehflüglers. Zudem sind solche elektrischen Ringmotoren auch durch den Wegfall mechanischer Elemente laufruhig, geräuscharm und wartungsarm. Das einfache Anbringen des elektrischen Ringmotors am Rotormast begünstigt insbesondere im Zusammenhang mit einem Hybridantrieb eine kompakte Bauweise. Im Gegensatz hierzu hat der in der US 2017/0225573 A1 gezeigte Hybridantrieb den Nachteil, dass ein zusätzliches Getriebe für die Einkopplung der mechanischen Leistung des hier offenbarten elektrischen Antriebs notwendig ist, wodurch eine höhere Komplexität durch eine zusätzliche Welle und Umlenkgetriebe resultiert.

Unter Rotormast wird im Sinne der vorliegenden Erfindung beim Heckrotor die Heckrotornabe beziehungsweise beim Hauptrotor der Hauptrotormast verstanden.

Weitere vorteilhafte Ausführungsformen sind in den abhängigen Patentansprüchen angegeben.

Gemäss einer bevorzugten Ausführungsform kann der elektrische Antrieb als elektrischer Ringmotor mit einem als Rotor fungierenden, insbesondere ringförmigen, Innenläufer ausgestaltet sein, wobei der Innenläufer fest mit dem Rotormast verbindbar ist.

Eine solche bevorzugte Ausführungsform hat den Vorteil, dass durch die erzielte, direkte Kraftübertragung vom als elektrischer Ringmotor ausgestalteten, elektrischen Antrieb auf den Rotormast auf eine "gear box" bzw. ein Hauptrotorgetriebe verzichtet werden kann.

Grundsätzlich ist es gemäss einer alternativen, bevorzugten Ausführungsform denkbar, dass der elektrische Antrieb als elektrischer Ringmotor mit einem als Rotor fungierenden, insbesondere ringförmigen, Aussenläufer ausgestaltet ist, wobei der Aussenläufer fest mit dem Rotormast verbindbar ist. Der Vorteil einer solchen Aussenläufervariante liegt in einer noch kompakteren Bauweise, die noch mehr Drehmoment liefern kann. Die hohe Laufsicherheit und Laufruhe ist ebenso wie beim Innenläufer gegeben.

Gemäss einer weiteren bevorzugten Ausführungsform ist der elektrische Antrieb als elektrischer Ringmotor mit einem integrierten Getriebe ausgestaltet zur Kraftübertragung auf den Rotormast. Eine solche Kraftübertragung mittels integriertem Getriebe hat den Vorteil, dass die effizienteste Motordrehzahl, welche im Regelfall höher als die Rotordrehzahl ist, beibehalten werden kann. Im Weiteren besteht der Vorteil einer Kraftübertragung mittels integriertem Getriebe darin, dass bei der hierbei erzielten Untersetzung ein besonders hohes Drehmoment erzeugt und eine noch kompaktere Bauform unterstützt werden kann.

Grundsätzlich sind jegliche, geeignete Formen eines integrierten Getriebes denkbar. Besonders bevorzugt ist jedoch der elektrische Antrieb als elektrischer Ringmotor mit einem integrierten, als Planetengetriebe ausgeformten Getriebe ausgestaltet.

Vorzugsweise ist der elektrische Antrieb mechanisch zumindest mit dem Getriebegehäuse des Helikoptergetriebes verbindbar, insbesondere indem ein als Stator fungierender Aussenring des elektrischen Antriebs mit dem Getriebegehäuse fest verbindbar ist.

Besonders bevorzugt ist der elektrische Antrieb derart ausgelegt und dimensioniert, so dass ein Hauptrotor und / oder Heckrotor eines Drehflüglers, insbesondere eines Helikopters, autark ohne einen zusätzlichen Antrieb antreibbar ist. Im Sinne der vorliegenden Erfindung wird unter einem autarken, elektrischen Antrieb verstanden, dass eine mechanische Leistung von bevorzugt mindestens 150kW, bevorzugter 200kW bis 700kW, noch bevorzugter 300kW bis 600kW, ganz besonders bevorzugt rund 600kW erzielbar ist. Als Beispiel kann anhand eines elektrischen Antriebs von rund 600kW mechanischer Leistung bei einer niedrigen Drehzahl von 371 rpm ein hohes Drehmoment von ca. 15'500Nm erzielt werden.

Gemäss einer bevorzugten, möglichen Weiterbildung der vorliegenden Erfindung kann eine Vielzahl von als elektrische Ringmotoren ausgestalteten Antrieben koaxial zum Rotormast übereinander angeordnet und angebracht sein. Mit anderen Worten können eine Vielzahl von als elektrische Ringmotoren ausgestalteten Antrieben übereinander gestapelt sein. Die Verwendung einer Vielzahl gestapelter anstelle eines einzigen, elektrischen Ringmotors hat den besonderen Vorteil, dass ein modularer Aufbau eines elektrischen Antriebs erzielbar ist und verschiedene Leistungsstufen mit niedrigem Aufwand fertigungstechnisch konfektioniert werden können. Ein hoher Leistungsbedarf kann durch den modularen Aufbau auf mehrere Stufen mit niedrigerer elektrischer Leistung verteilt werden, wodurch sich durch die resultierende, grössere Oberfläche physikalisch und fertigungstechnisch ein Vorteil für das Abführen der Verlustleistungswärme von Motor und Steuerung ergibt. Zusätzlich schützt ein über mehrere Stufen verteilter, elektrischer Antrieb noch besser vor dem Totalausfall des zweiten, als thermodynamische Kraftmaschine ausgestalteten Antriebs.

Dadurch kann vorteilhaft gewährleistet werden, dass bei einem Notfall in Form eines Ausfalls eines zweiten, beispielsweise als thermodynamische Kraftmaschine ausgestalteten Antriebs des mehrmotorigen Helikopters für eine vorbestimmte Dauer auf die Notstromleistung von dem verbleibenden, elektrischen Antrieb verlassen kann, um den Helikopter in ein sicheres Flugregime zu versetzen und auf den Motorausfall zu reagieren.

Grundsätzlich kann der erfindungsgemässe Drehflügler lediglich einen autarken, als elektrischer Ringmotor ausgestalteten und koaxial zum Rotormast angeordneten elektrischen Antrieb umfassen. Ein weiterer Aspekt der vorliegenden Erfindung betrifft jedoch einen Drehflügler mit einem Hybridantrieb, umfassend den erfindungsgemässen, elektrischen Antrieb sowie einen zweiten, als thermodynamische Kraftmaschine ausgestalteten, Antrieb, beispielsweise einen Verbrennungsmotor, Turbinenmotor, Fremdzündungsmotor, Dieselmotor, Brennstoffzellenantrieb oder dergleichen.

Erfindungsgemäss kann bei einem solchen Hybridantrieb der elektrische Antrieb mit dem zweiten, als thermodynamische Kraftmaschine ausgestalteten, Antrieb gekoppelt werden, so dass der elektrische Antrieb mit dem zweiten Antrieb in einem gekoppelten Zustand mitdrehen kann und dadurch der elektrische Antrieb den zweiten Antrieb beim Antreiben des Hauptrotors und/oder Heckrotors unterstützen kann beziehungsweise umgekehrt. Im Sinne der vorliegenden Erfindung kann ein derartiger Hybridantrieb als ein parallel ausgebildeter Hybridantrieb aufgefasst werden.

Grundsätzlich kann der Rotormast des erfindungsgemässen Drehflüglers einteilig ausgestaltet sein. Vorzugsweise ist der Rotormast des erfindungsgemässen Drehflüglers zweiteilig ausgestaltet und umfasst einen Lagermast sowie einen Aussenmast, wobei der Aussenmast als Hohlkörper ausgestaltet rotierbar um eine zentrische Achse relativ zum Lagermast, den Lagermast konzentrisch umgebend, gelagert ist, und wobei der Aussenmast mit dem Helikoptergetriebe wirkverbindbar ist, wobei der Lagermast ortsfest und drehfest im Drehflügler lagerbar ist, sodass der Aussenmast drehfest mit einem Hauptrotor koppelbar ist und mit dem Helikopterrotorgetriebe in Rotation versetzbar ist. Im Zusammenhang mit einer möglichen Aussenläufervariante könnte beispielsweise ein als Stator fungierender Innenring am Lagermast drehfest befestigt sein, während ein als Rotor fungierender, ringförmiger Aussenläufer am Aussenmast befestigt ist. Gemäss einer weiteren bevorzugten, möglichen Weiterbildung der vorliegenden Erfindung kann auch bei einer solchen Aussenläufervariante eine Vielzahl von als elektrische Ringmotoren ausgestalteten Antrieben koaxial zum Rotormast übereinander angeordnet und angebracht (d.h. übereinander gestapelt) sein mit den erwähnten Vorteilen eines gestapelten anstelle eines einzigen, elektrischen Ringmotors, d.h. ein modularer Aufbau, einfache Erzielung verschiedener Leistungsstufen, Verteilung eines hohen Leistungsbedarfs auf mehrere Stufen mit niedriger Leistung. Gemäss einer noch weiteren bevorzugten Weiterbildung können bei einer solchen Aussenläufervariante mit übereinander gestapelten, elektrischen Ringmotoren die Ringmotoren mit einem integrierten, als Planetengetriebe ausgestalteten Getriebe ausgestaltet sein.

Vorzugsweise ist beim Helikopterrotorgetriebe des erfindungsgemässen Drehflüglers der Rotormast mit der als Antriebszahnrad ausgestalteten Antriebseinheit drehfest koppelbar, wobei das Antriebszahnrad auf dem Lagermast rotierbar gelagert ist mittels mindestens eines Radiallagers, und mittels eines mit dem Antriebszahnrad drehfest verbundenen Sonnenrads eine Rotation von mindestens einem Antriebsplanetenrad an einer dem Antriebszahnrad zugewandten Seite eines jeweiligen Planetenradträgers um eine jeweilige Planetenradachse erreichbar ist, und wobei mindestens ein, dem mindestens einen Antriebsplanetenrad zugehöriges, ortsfest gelagertes Planetenrad von einem um eine zentrische Achse rotierbaren, innenverzahnten Zahnradring umschlossen ist und zwischen Zahnradring und dem Aussenmast eine Kraftübertragungseinrichtung derart anbringbar oder angeformt ist, so dass ausgehend von einer Rotationsbewegung des Antriebszahnrads der Aussenmast und der mit dem Aussenmast drehfest gekoppelte Hauptrotor in Rotation versetzbar ist.

Grundsätzlich ist es jedoch auch denkbar, dass beim Helikopterrotorgetriebe des erfindungsgemässen Drehflüglers ein Planetengetriebe mit nicht-ortsfesten Planetenrädern verwendet wird. Hierbei weist das Planetengetriebe eine Vielzahl von aussenverzahnten Planetenrädern auf, welche auf zugehörigen Planetenträgern lagern. Die Planetenräder sind konstruktionsbedingt in einem örtlich fixierten Zahnradring rotierbar gelagert. Dabei rotieren die nicht-ortsfesten Planetenräder jeweils um ihre Planetenachse und drehen innerhalb des Zahnradringes um eine zentrale Rotorachse. Die Rotation der Planetenräder erfolgt durch rotativen Antrieb eines zentralen Sonnenrades, welches ebenfalls örtlich fixiert, aber rotierbar um die zentrale Rotorachse gelagert ist. Ein Antrieb dreht das zentrale Sonnenrad, sodass die Rotationsbewegung über das Sonnenrad und die Planetenräder auf den Rotormast übertragen wird.

Im Zusammenhang mit einer derartigen Ausgestaltung des Helikopterrotorgetriebes kann vorteilhaft ein Totalausfall des Hauptantriebstrangs für eine bestimmte Zeit vollständig kompensiert werden, um eine sichere Landung zu gewährleisten.

Ausserdem kann die unmittelbar schnell zur Verfügung stehende zusätzliche Leistung für die Entlastung beziehungsweise Stützung des als thermodynamische Kraftmaschine ausgestalteten Antriebs genutzt werden. Mögliche Vorteile hierdurch wären eine verbesserte Standzeit des als thermodynamische Kraftmaschine ausgestalteten Antriebs, beispielsweise resultierend in einer Einsparung von Wartungskosten, und eine verbesserte Effizienz im Antrieb, beispielsweise resultierend in einer Reduzierung des Verbrauchs fossilen Brennstoffs, bei einem möglichst einfachen und kompakten Aufbau des Antriebssystems.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben. Es zeigen:
- Fig. 1: eine perspektivische Ansicht einer bevorzugten Ausführungsform des erfindungsgemässen Drehflüglers mit einem Hybridantrieb;
- Fig. 2: einen Längsschnitt durch die bevorzugte Ausführungsform des erfindungsgemässen Drehflüglers mit dem Hybridantrieb;
- Fig. 2a: einen Längsschnitt durch eine weitere bevorzugte Ausführungsform des erfindungsgemässen Drehflüglers mit dem Hybridantrieb, wobei eine Vielzahl elektrischer Ringmotoren übereinander gestapelt sind;
- Fig. 3: einen Längsschnitt durch die bevorzugte Ausführungsform des erfindungsgemässen Drehflüglers mit dem Hybridantrieb, wobei der elektrische Antrieb als elektrischer Ringmotor mit einem integrierten, als Planetengetriebe ausgestalteten Getriebe ausgestaltet ist;
- Fig. 3a: einen Längsschnitt durch eine weitere bevorzugte Ausführungsform des erfindungsgemässen Drehflüglers mit dem Hybridantrieb und einer Vielzahl elektrischer, übereinander gestapelter Ringmotoren, wobei die elektrischen Ringmotoren mit einem integrierten, als Planetengetriebe ausgestalteten Getriebe ausgestaltet sind;
- Fig. 4: ein Funktionsblockbild der Antriebsleistungssteuerung der bevorzugten Ausführungsform des erfindungsgemässen Drehflüglers mit einem hier parallel ausgebildeten Hybridantrieb;
- Fig. 5: ein Funktionsblockbild der Antriebsleistungssteuerung eines nicht beanspruchten Beispiels eines Drehflüglers mit einem hier seriell ausgebildeten Hybridantrieb

### Beschreibung

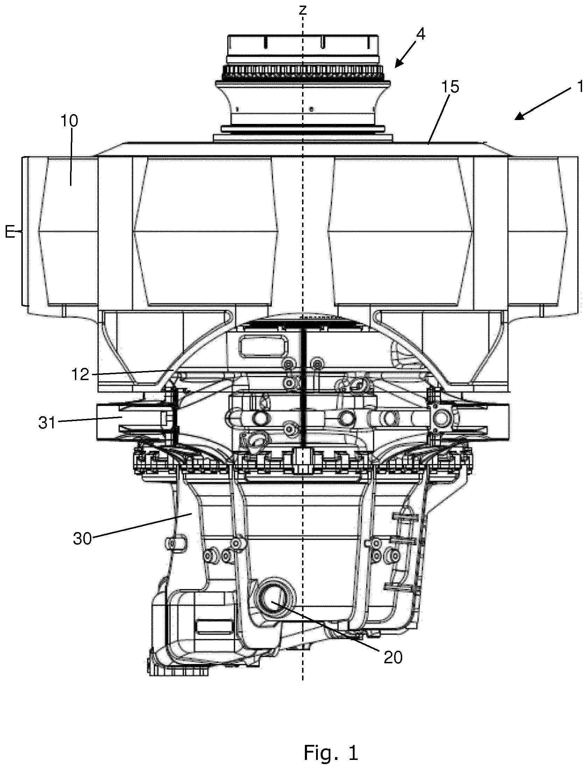

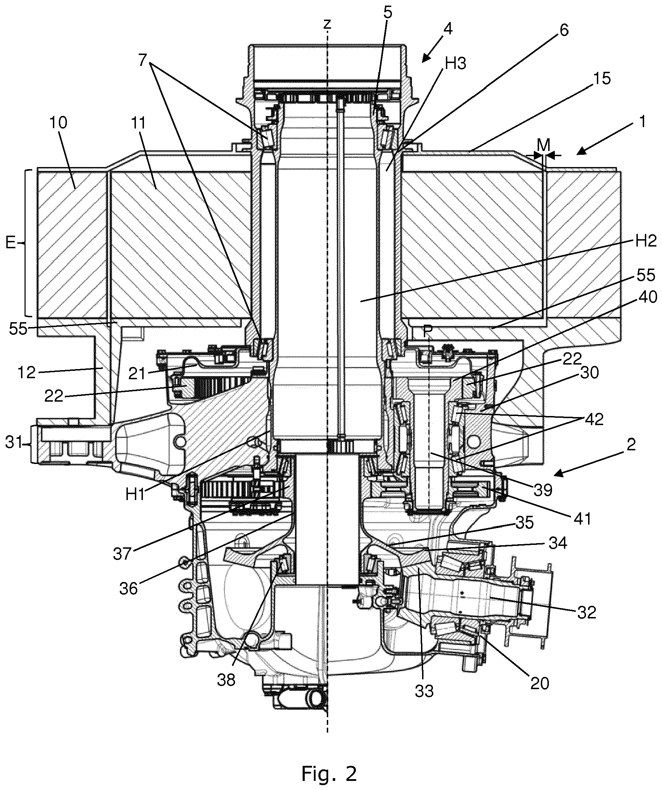

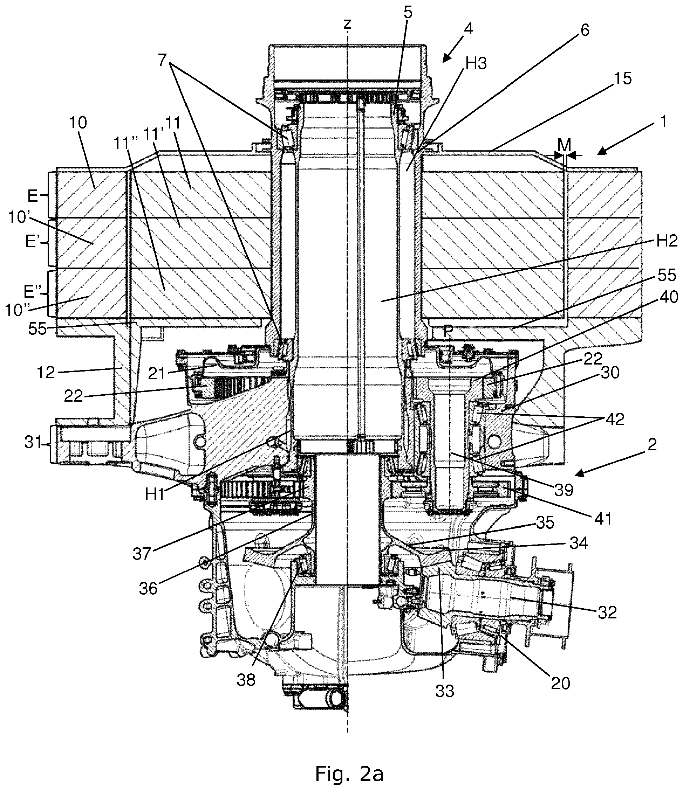

**Fig.1** zeigt eine perspektivische Ansicht einer bevorzugten Ausführungsform des erfindungsgemässen Drehflüglers mit einem Hybridantrieb 1. Wie in Fig.2 im Detail gezeigt ist der hier gezeigte, elektrische Antrieb E mechanisch zumindest mit dem Getriebegehäuse 30 des Helikopterrotorgetriebes bzw. Hauptrotorgetriebes 2 verbunden, indem ein als Stator fungierender Aussenring 10 des elektrischen Antriebs E über hier vier erste Befestigungsarme 12 des Aussenrings 10 mit hier vier korrespondierenden, zweiten Befestigungsarmen 31 des Getriebegehäuses 30 fest verbunden ist.

**Fig.2** zeigt einen Längsschnitt durch die bevorzugte Ausführungsform des erfindungsgemässen Drehflüglers mit dem Hybridantrieb 1.

Der hier gezeigte Hybridantrieb 1 umfasst einen elektrischen Antrieb E sowie einen hier nicht gezeigten, zweiten, als thermodynamische Kraftmaschine ausgestalteten, Antrieb TK, beispielsweise einen Verbrennungsmotor, Turbinenmotor, Fremdzündungsmotor, Dieselmotor, Brennstoffzellenantrieb oder dergleichen.

Der in Fig.2 gezeigte, zweiteilig ausgestaltete Hauptrotormast 4 umfasst einen Lagermast 5 sowie einen als Hohlkörper ausgestalteten Aussenmast 6 mit einem Hohlraum H3, wobei der Aussenmast 6 den Lagermast 5 konzentrisch um die zentrische Achse z umgibt.

Der elektrische Antrieb E ist als elektrischer Ringmotor ausgestaltet, wobei der elektrische Ringmotor koaxial zum Rotormast 4, insbesondere koaxial zu einer entlang des Rotormasts bzw. Hauptrotormasts 4 verlaufenden, zentrischen Achse z, angeordnet und angebracht ist. Im Weiteren ist der hier gezeigte, elektrische Ringmotor mit einem als Rotor fungierenden, ringförmigen (d.h. einen Innenring bildenden) Innenläufer 11 ausgestaltet, wobei der Innenläufer 11 fest mit dem Aussenmast 6 des Hauptrotormasts 4 verbunden ist.

Gemäss der hier gezeigten, bevorzugten Ausführungsform von Fig.2 kann der elektrische Antrieb E mit dem zweiten, als thermodynamische Kraftmaschine ausgestalteten, Antrieb TK gekoppelt werden, indem der Innenläufer 11 des elektrischen Antriebs E fest mit dem Aussenmast 6 des Hauptrotormasts 4 verbunden und wie nachfolgend erläutert das mit dem zweiten Antrieb in Wirkverbindung stehende Hauptrotorgetriebe 2 über einen Zahnradringmitnehmer 21 ebenfalls drehfest mit dem Aussenmast 6 verbunden ist. Bei der hier gezeigten, bevorzugten Ausführungsform existiert vorteilhaft kein direkter mechanischer Berührungsbereich beziehungsweise keine Kopplung zwischen dem feststehenden Teil (Stator) des elektrischen Antriebs E und dem als thermodynamische Kraftmaschine ausgestalteten, zweiten Antrieb TK. Durch den koaxial angeordneten Ringmotor ist hier die Wirkverbindung rein elektromagnetisch. Mit anderen Worten muss bei dem hier vorliegenden, als Ringmotor ausgestalteten, elektrischen Antrieb E kein zusätzlicher Aufwand für einen Freilauf beziehungsweise Nichtbetrieb aufgewendet werden, wodurch zudem ein Blockieren des elektrischen Antriebs E nahezu ausgeschlossen ist.

Um eine noch höhere Sicherheitsstufe zu erreichen, könnte optional sogar im Bereich zwischen den rotierenden Teil (Rotor) des als Ringmotor ausgestalteten, elektrischen Antriebs E und dem Helikopterrotorgetriebe beziehungsweise dem als thermodynamische Kraftmaschine ausgestalteten, zweiten Antrieb TK ein Entkopplungsmechanismus vorhanden sein.

Dadurch kann der elektrische Antrieb E mit dem zweiten Antrieb in diesem gekoppelten Zustand ein zusätzliches Drehmoment mit aufnehmen und dadurch der elektrische Antrieb E den zweiten Antrieb beim Antreiben des Hauptrotors unterstützen beziehungsweise umgekehrt.

Das Hauptrotorgetriebe 2 wird von einem Getriebegehäuse 30 umschlossen, womit die verschiedenen Bauteile geschützt vor äusseren Einflüssen gehalten werden. Dabei ist der hier gezeigte, elektrische Antrieb E mechanisch zumindest mit dem Getriebegehäuse 30 des Helikopterrotorgetriebes bzw. Hauptrotorgetriebes 2 verbunden, insbesondere indem ein als Stator fungierender Aussenring 10 des elektrischen Antriebs E mit dem Getriebegehäuse 30 fest verbunden beziehungsweise fixiert ist. Insbesondere sind hierbei erste Befestigungsarme 12 des Aussenrings 10 mit korrespondierenden, zweiten Befestigungsarmen 31 des Getriebegehäuses 30 fest verbindbar.

Hierbei wird wie in Fig.2 ersichtlich zwischen Aussenring 10 und Innenläufer 11 ein Magnetspalt M ausgebildet. Vorzugsweise ist der Hauptrotormast 4 derart gefertigt, so dass das erforderliche Drehmoment durch die Magnetfelder erzeugt wird bzw. Biegemomente vom Rotor möglichst kleine oder keine Auswirkung auf den Magnetspalt M zwischen Aussenring 10 und Innenläufer 11 haben. Eine Abdeckung 15 schützt den elektrischen Antrieb E gegenüber äusseren Umwelteinflüssen.

Das in Fig.2 gezeigte Hauptrotorgetriebe beziehungsweise Helikopterrotorgetriebe 2 weist einen zentralen Hohlraum H1 auf. In diesem zentralen Hohlraum H1 ist ein ortsfester und drehfester Lagermast 5 gelagert, welcher hier als Hohlkörper mit einem Hohlraum H2 sowie eine zentrische Achse z umschliessend ausgestaltet ist. Die zentrische Achse z bildet gleichzeitig die Längsrichtung des Lagermastes 5 und eine Rotationsachse der Hauptrotorwelle beziehungsweise des Hauptrotormastes 4. Hier ist der Lagermast 5 das Getriebegehäuse 30 vollständig querend ausgestaltet, wobei durch den zentrischen Hohlraum H2 im Lagermast 5 im Wesentlichen entlang der zentrischen Achse z beispielsweise hier nicht dargestellte Steuerstangen oder elektrische Leitungen wie Kabel oder dergleichen durchführbar sind. Durch eine solche Verlagerung in den Lagermast 5 können verglichen mit einer Anordnung ausserhalb des Hauptrotormasts 4 die Steuerstangen oder Kabel durch äussere Einflüsse wie Vogelschlag etc. nicht beschädigt werden. Im Weiteren wird durch die Verlagerung der Steuerstangen in den Hohlraum H2 des Lagermasts 5 ausserhalb des Hauptrotormasts 4 genügend Platz für die Anbringung eines als elektrischer Ringmotor ausgestalteten, elektrischen Antriebs E koaxial zum Hauptrotormast 4 geschaffen. Mit anderen Worten erlauben die innenliegenden Steuerstangen und der damit einhergehende, mögliche Verzicht auf eine Taumelscheibe ausserhalb des Rotormasts 4 eine einfache Befestigung eines elektrischen Ringmotors am Rotormast 4.

Vorzugsweise ist antriebsstrangseitig am Getriebegehäuse 30 eine Umlenkvorrichtung zum Umlenken und Ausrichten der Steuerstangen angeordnet.

Ein Hauptantriebsstrang beziehungsweise Antriebsstrang 32, welcher über eine Öffnung 20 im Getriebegehäuse 30 aufgenommen ist, steht hier mit dem hier nicht gezeigten zweiten, als thermodynamische Kraftmaschine ausgestalteten Antrieb TK in einer mechanischen Wirkverbindung. Am Lagermast 5 ist hier gemäss Fig.2 ein Antriebszahnrad 34 drehbar gelagert, wobei das Antriebszahnrad 34 hier eine Kegelradverzahnung aufweist, welche mit einem Antriebsstrangzahnrad 33 des Antriebsstranges 32 zusammenwirken kann. Mit dem Antriebszahnrad 34 ist ein als Hohlwelle ausgebildetes, zweites Sonnenrad 35 verbunden, welches einen Rohrabschnitt 36 mit einer Aussenverzahnung 37 aufweist. Durch das zweite Sonnenrad 35 ist das Antriebszahnrad 34 rotierbar um die zentrische Achse z auf den örtlich und rotativ fixierten Lagermast 5 aufgesteckt gelagert. Das zweite Sonnenrad 35 ist - wie hier in Fig.2 gezeigt - auf Sonnenradlager 38 rotierbar auf dem Lagermast 5 gelagert. Durch den Antriebsstrang 32 ist das zweite Sonnenrad 35 antreibbar, wodurch das zweite Sonnenrad 35 eine treibende Hohlwelle darstellt. Auf der Höhe der Aussenverzahnung 37 des zweiten Sonnenrads 35 ist eine Mehrzahl von Antriebsplanetenrädern 41 auf zugehörigen, zweiten Planetenradträgern 39 angeordnet, wobei die Planetenradträger 39 als Planetenwellen aufgefasst werden können. Die Antriebsplanetenräder 41 weisen jeweils eine Aussenverzahnung auf und sind mit der Aussenverzahnung 37 des zweiten Sonnenrads 35 in Eingriff. Die zweiten Planetenradträger 39 sind ortsfest ausgestaltet und weisen einen Abstand zum Getriebegehäuse 30 bzw. zur zentrischen Achse z bzw. zum rotierbaren, zweiten Sonnenrad 35 auf, dass die Antriebsplanetenräder 41 und ihre zweiten Planetenradträger 39 in eine ortsfeste Rotation innerhalb des Getriebegehäuses 30 versetzt werden können. Die zweiten Planetenradträger 39 sind als Doppelplanetenträger ausgestaltet, da zu jedem Antriebsplanetenrad 41 in Richtung Planetenradachse P beabstandet ein zweites Planetenrad 40 an jedem zweiten Planetenradträger 39 angeordnet ist. Die Antriebsplanetenräder 41 sind jeweils parallel zu den zugehörigen zweiten Planetenrädern 40 angeordnet. Die Vielzahl von zweiten Planetenradträgern 39 ist um die zentrische Achse z, um den äusseren Umfang des Lagermasts 5 verteilt und ortsfest im Getriebegehäuse 30 angeordnet.

Das hier gezeigte Hauptrotorgetriebe 2 kann als ein zweistufiges Planetengetriebe aufgefasst werden. Der Lagermast 5 quert hier das Getriebegehäuse 30 vollständig und ragt aus dem Getriebegehäuse 30 auf der dem Antriebsstrang 32 abgewandten Seite heraus.

Auf Höhe der zweiten Planetenräder 40 in Richtung zentrischer Achse z ist ein Zahnradring 22 rotierbar um die zentrische Achse z angeordnet. Der Zahnradring 22 umschliesst alle zweiten Planetenräder 40, ist durch die Rotation der zweiten Planetenräder 40 antreibbar und ist damit um die zentrische Achse z rotierbar. Am Zahnradring 22 ist ein, als Kraftübertragungseinrichtung fungierender, Zahnradringmitnehmer 21 angeordnet, mittels welchem die Rotation des Zahnradringes 22 auf den drehbaren Aussenmast 6 übertragbar ist.

**Fig.2a** zeigt einen Längsschnitt durch eine weitere bevorzugte Ausführungsform des erfindungsgemässen Drehflüglers mit dem Hybridantrieb, wobei - im Unterschied zu der in Fig. 2 gezeigten Ausführungsform - eine Vielzahl, d.h. hier drei, elektrische Ringmotoren E; E'; E" übereinander gestapelt sind und jeweils einen Aussenring 10; 10`; 10" sowie einen Innenläufer 11; 11'; 11" umfassen.

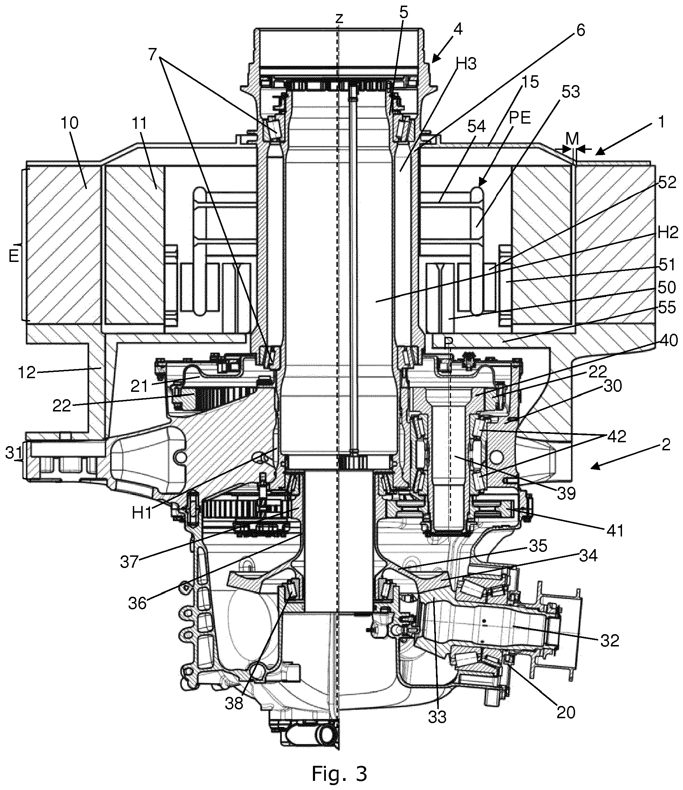

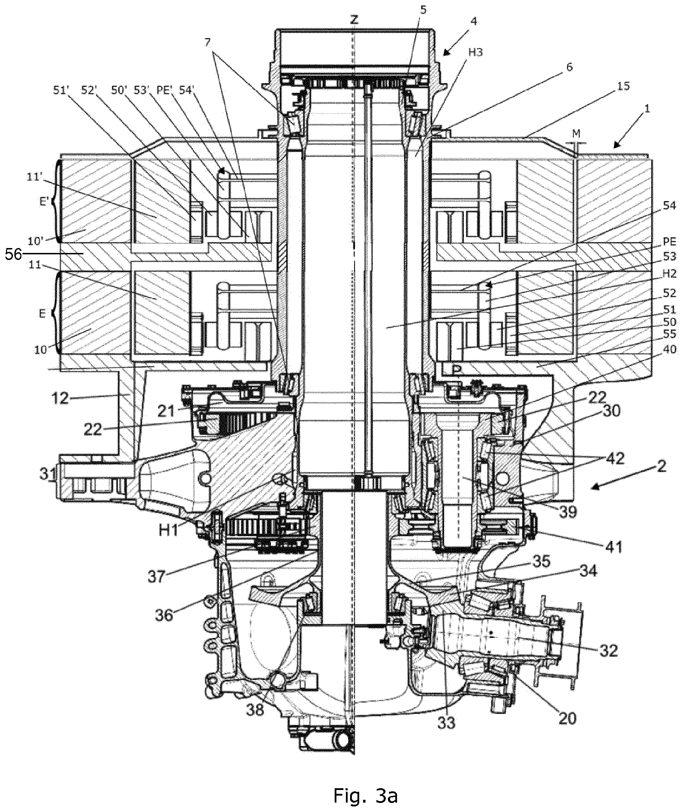

**Fig.3** zeigt einen Längsschnitt durch eine weitere bevorzugte Ausführungsform des erfindungsgemässen Drehflüglers mit dem Hybridantrieb 1, wobei der elektrische Antrieb E als elektrischer Ringmotor mit einem integrierten, als Planetengetriebe PE ausgestalteten Getriebe ausgestaltet ist. Wie in Fig. 3 ersichtlich entspricht hier das Hauptrotorgetriebe 2 dem Hauptrotorgetriebe 2 der in Fig. 2 gezeigten, bevorzugten Ausführungsform.

Bei der hier gezeigten, bevorzugten Ausführungsform ist an dem als Rotor fungierenden, ringförmigen (d.h. einen Innenring bildenden) Innenläufer 11 ein innenverzahntes Hohlrad 51 drehfest angeordnet, so dass das innenverzahnte Hohlrad 51 die Rotation des Innenläufers 11 mitmacht.

Das hier gezeigte Planetengetriebe PE weist eine Vielzahl von aussenverzahnten, ersten Planetenrädern 52 auf, welche auf zugehörigen ersten Planetenträgern 53 lagern. Die Aussenverzahnungen der ersten Planetenräder 52 sind hier mit der Innenverzahnung des Hohlrads 51 in Eingriff. Die ersten Planetenräder 52 sind somit konstruktionsbedingt in dem Hohlrad 51 rotierbar gelagert. Dabei rotieren die nicht-ortsfesten Planetenräder 52 jeweils um ihre Planetenachse P und drehen innerhalb des Zahnradringes 22 um eine zentrale Rotorachse beziehungsweise die zentrische Achse z. Die Rotation der ersten Planetenräder 52 erfolgt hier durch rotativen Antrieb des am Innenläufer 11 angeordneten, innenverzahnten Hohlrades 51 um ein hier drehfest angeordnetes, d.h. nicht rotierbares, erstes Sonnenrad 50. Wie in Fig. 3 ersichtlich kommt die drehfeste Anordnung des ersten Sonnenrads 50 bei dieser weiteren, bevorzugten Ausführungsform anhand eines fest stehenden Gehäusebodens 55, welcher eine starre Verbindung zwischen Aussenring 10 und dem ersten Sonnenrad 50 herstellt, zustande.

Über ein drehfest fixiertes Verbindungselement 54 zwischen den ersten Planetenträgern 53 und dem Aussenmast 6 wird der Aussenmast 6 in Rotation versetzt.

**Fig.3a** zeigt einen Längsschnitt durch eine weitere bevorzugte Ausführungsform des erfindungsgemässen Drehflüglers mit dem Hybridantrieb 1 und einer Vielzahl, d.h. hier zwei, elektrischen, übereinander gestapelten Ringmotoren E; E`, wobei die elektrischen Ringmotoren E; E' jeweils mit einem integrierten, als Planetengetriebe PE; PE` ausgestalteten Getriebe ausgestaltet sind. Wie in Fig.3a ersichtlich weisen die beiden übereinander gestapelten, elektrischen Ringmotoren E; E' jeweils erste Sonnenräder 50; 50`, erste innenverzahnte Hohlräder 51; 51', erste Planetenräder 52; 52`, erste Planetenradträger 53; 53' sowie Verbindungselemente 54; 54' auf. Zwischen den beiden übereinander gestapelten, elektrischen Ringmotoren E; E' weist diese weitere bevorzugte Ausführungsform einen Zwischenboden 56 auf, wobei der Zwischenboden 56 eine Verbindung zwischen den Aussenringen 10; 10' und dem ersten Sonnenrad 50' herstellt, während der fest stehende Gehäuseboden 55 eine starre Verbindung zwischen Aussenring 10 und dem ersten Sonnenrad 50 herstellt. Diese weitere bevorzugte Ausführungsform vereint die Vorteile einer mittels integriertem Getriebe erzielten Untersetzung mit besonders hohem, erzeugtem Drehmoment sowie eines mittels übereinander gestapelter, elektrischer Ringmotoren erzielten modularen Aufbaus eines elektrischen Antriebs mit verschiedenen, erzielbaren Leistungsstufen.

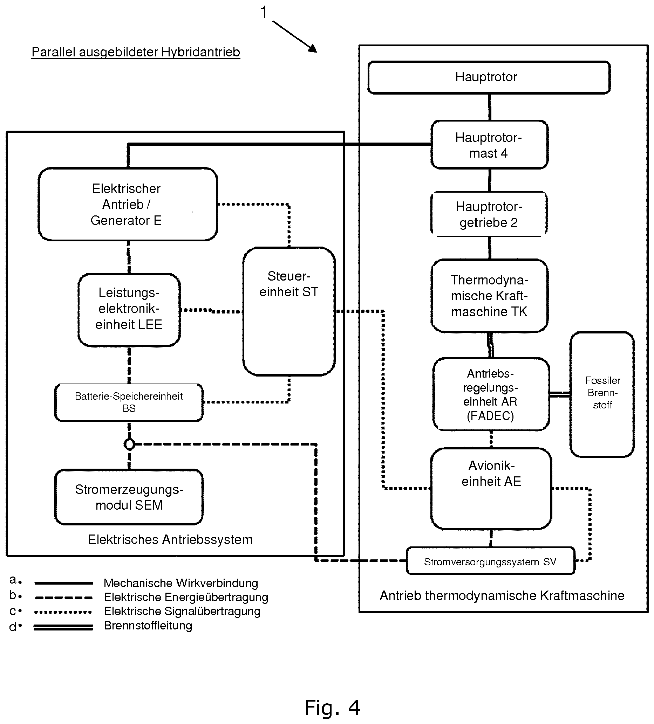

**Fig.4** zeigt ein Funktionsblockbild der Antriebsleistungssteuerung der bevorzugten Ausführungsform der erfindungsgemässen Drehflüglers mit einem hier parallel ausgebildeten Hybridantrieb 1. In einem linken Rahmen werden hierbei die hauptsächlichen Komponenten des elektrischen Antriebssystems dargestellt, während in einem rechten Rahmen die hauptsächlichen Komponenten eines als thermodynamische Kraftmaschine ausgestalteten Antriebs TK dargestellt werden.

Wie bereits in Fig.2 gezeigt ist beim erfindungsgemässen Drehflügler mit einem Hybridantrieb 1 ein als thermodynamische Kraftmaschine ausgestalteter Antrieb TK sowie ein elektrischer Antrieb E mechanisch in Wirkverbindung mit dem Hauptrotormast 4.

Wie in Fig.4 ersichtlich umfasst der Drehflügler hier eine Steuereinheit ST sowie eine Leistungselektronik-Einheit LEE (auch als "inverter" bezeichnet), wobei anhand einer elektrischen Signalübertragung c die Leistungselektronik-Einheit LEE mit der Steuereinheit ST interagiert. Im Weiteren ist die Leistungselektronik-Einheit LEE derart ausgestaltet, um anhand einer elektrischen Energieübertragung b elektrische Energie von der elektrischen Energiequelle in Form einer Batterie-Speichereinheit BS aufzunehmen und in Form von elektrischem Strom an den elektrischen Antrieb E weiterzuleiten.

Dabei ist die Steuereinheit ST derart ausgestaltet, so dass sie anhand einer elektrischen Signalübertragung c Sensor-Eingabedaten über eine Avionikeinheit AE vom zweiten, als thermodynamische Kraftmaschine ausgestalteten Antrieb TK, vom elektrischen Antrieb E, von der Pilotensteuerung, und von der Energiequelle aufnehmen kann; und Ausgabedaten an die Leistungselektronik-Einheit LEE weiterleiten kann.

Wie im rechten Rahmen der Fig.4 ersichtlich wird hier ein als thermodynamische Kraftmaschine ausgestalteter, zweiter Antrieb TK mittels einer Antriebsregelungseinheit AR über eine, einen fossilen Brennstoff fördernde, Brennstoffleitung d betrieben. Der als thermodynamische Kraftmaschine ausgestaltete, zweite Antrieb TK ist hierbei über ein Hauptrotorgetriebe 2 und den Hauptrotormast 4 in mechanischer Wirkverbindung a mit dem Hauptrotor. Dabei ist die Antriebsregelungseinheit AR vorzugsweise autonom und volldigital als so genannte FADEC ausgebildet, wodurch der zweite Antrieb TK in allen Betriebszuständen selbständig geregelt wird.

Mittels elektronischer Signalübertragung c kann die als FADEC ausgebildete Antriebsregelungseinheit AR mit einer Avionikeinheit AE in Verbindung stehen, wobei die Avionikeinheit AE die vom zweiten Antrieb TK herrührende Ausgangsleistung erfasst und mittels elektronischer Signalübertragung c an die Steuereinheit ST weiterleiten kann.

Der erfindungsgemässe Drehflügler kann ein zusätzliches Stromversorgungssystem SV umfassen, welches eine zusätzliche Energieversorgung der Avionikeinheit AE und der Batterie-Speichereinheit BS sicherstellt.

Insbesondere kann die Steuereinheit ST derart mit einer Logik ausgestaltet sein, so dass ausgehend von der Leistungselektronik-Einheit LEE die Ausgangsleistung des elektrischen Antriebs E abhängig von den Flugbedingungen, vom Flugprofil, vom Batteriestand, sowie von der vom zweiten Antrieb TK herrührenden Ausgangsleistung einstellbar ist. Mit anderen Worten könnte bei Ausfall des zweiten Antriebs TK die Steuereinheit ST notfalls die Ausgangsleistung des elektrischen Antriebs E automatisch erhöhen.

Zudem kann der elektrische Antrieb E des Hybridantriebs 1 des erfindungsgemässen Drehflüglers in einem drehfest gekoppelten Zustand zwischen dem elektrischen Antrieb E und dem zweiten, als thermodynamische Kraftmaschine ausgestalteten, Antrieb TK und während des Betriebs des zweiten Antriebs TK der sich im Nichtbetrieb befindende, elektrische Antrieb E als Generator fungieren für eine zusätzliche Energierückgewinnung für die Batterie-Speichereinheit BS. Vorzugsweise ist in der Leistungselektronik-Einheit LEE beziehungsweise im elektronischen Antrieb E ein Gleichrichter beispielsweise in Form einer Sperrdiode vorgesehen, wodurch im Nichtbetrieb des elektrischen Antriebs E die Batterie-Speichereinheit BS aufgeladen werden kann. Obwohl bei der in Fig. 4 gezeigten Ausführungsform bereits der elektrische Antrieb als Generator fungieren kann, kann optional der erfindungsgemässe Drehflügler zusätzliche Stromerzeugungsmodule SEM umfassen zur Aufladung der Batterie-Speichereinheit BS. Besonders bevorzugt erlaubt die Logik der Steuereinheit ST im Weiteren einen automatischen Moduswechsel zwischen der Drehmomenterzeugung zum Antreiben des Rotors und der zusätzlichen Energierückgewinnung für die Batterie-Speichereinheit BS.

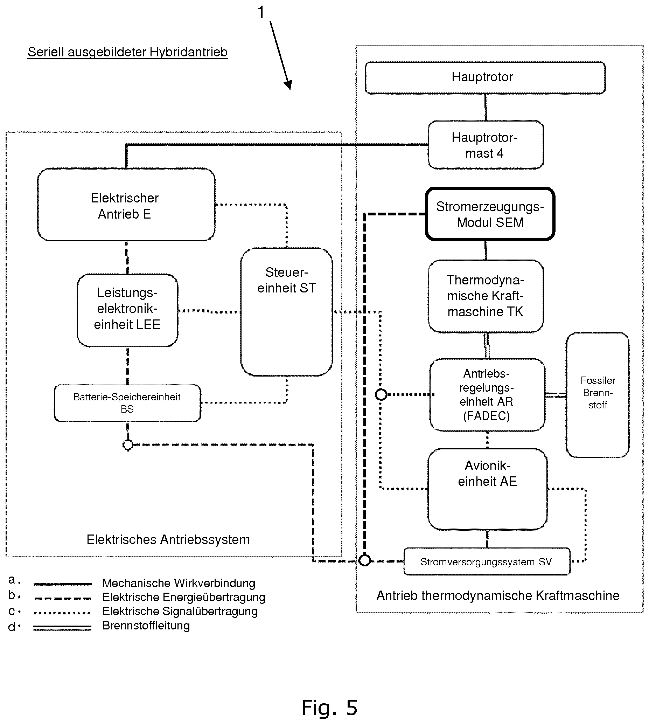

**Fig. 5** zeigt ein Funktionsblockbild der Antriebsleistungssteuerung eines nicht beanspruchten Drehflüglers mit einem hier seriell ausgebildeten Hybridantrieb 1. Wie in Fig. 5 ersichtlich, besteht, als wesentlicher Unterschied zu dem in Fig. 4 gezeigten, parallel ausgebildeten Hybridantrieb 1, hier keine mechanische Wirkverbindung zwischen dem als thermodynamische Kraftmaschine ausgestalteten, zweiten Antrieb TK und dem Hauptrotormast 4 beziehungsweise dem Hauptrotor.

Der nicht beanspruchte Drehflügler kann zusätzliche, mit dem Antrieb 2 mechanisch gekoppelte, Stromerzeugungsmodule SEM umfassen zur Aufladung der Batterie-Speichereinheit BS über eine zusätzliche, elektrische Energieübertragung b, um einen kontinuierlichen Dauerbetrieb des als elektrischer Ringmotor ausgestalteten, elektrischen Antriebs E während einer gesamten Mission beziehungsweise eines gesamten Flugs zu ermöglichen. Im Zusammenhang mit einem solchen bevorzugt autarken, elektrischen Antrieb E müssen die Stromerzeugungsmodule SEM entsprechend genügend Strom liefern können, um den autarken Betrieb des elektrischen Antriebs E zu garantieren. Das mindestens eine Stromerzeugungsmodul SEM fungiert hier als zusätzlicher Stromgenerator, der komplett die Energie für einen kontinuierlichen Betrieb des elektrischen Antriebs E liefert.

Im Weiteren kann der nicht beanspruchte Drehflügler über eine zusätzliche, elektrische Signalübertragung c zwischen der Steuereinheit ST und der als FADEC ausgebildeten Antriebsregelungseinheit AR je nach Bedarf der zweite Antrieb TK zugeschaltet werden, beziehungsweise der zweite Antrieb TK kann je nach Bedarf in Betrieb genommen werden.

Bei dem nicht beanspruchten Drehflügler kann der als thermodynamische Kraftmaschine ausgestaltete Antrieb TK lediglich als Mittel zur Verlängerung der Flugreichweite verstanden werden.

### Bezugszeichenliste

- 1: Hybridantrieb
- 2: Hauptrotorgetriebe
- 4: Rotormast bzw. Hauptrotormast
- 5: Lagermast
- 6: Aussenmast
- 7: Lager (zwischen Lagermast und Aussenmast)
- 10: Aussenring
- 11: Innenläufer
- 12: Erster Befestigungsarm (des als Stator fungierenden Aussenrings)
- 15: Abdeckung (des elektrischen Antriebs)
- 20: Öffnung (im Getriebegehäuse zur Aufnahme des Antriebsstrangs)
- 21: Zahnradringmitnehmer (als Kraftübertragungsmittel)
- 22: Zahnradring
- 30: Getriebegehäuse (des Hauptgetriebes)
- 31: Zweiter Befestigungsarm (des Getriebegehäuses)
- 32: Antriebsstrang
- 33: Antriebsstrangzahnrad
- 34: Antriebszahnrad
- 35: Zweites Sonnenrad
- 36: Rohrabschnitt
- 37: Aussenverzahnung (des Rohrabschnitts)
- 38: Sonnenradlager
- 39: Zweiter Planetenradträger
- 40: Zweites Planetenrad
- 41: Antriebsplanetenrad
- 42: Planetenradträgerlager
- 50; 50': Erstes Sonnenrad (des integrierten Planetengetriebes im Ringmotor)
- 51; 51': Hohlrad
- 52; 52': Erstes Planetenrad (des integrierten Planetengetriebes im Ringmotor)
- 53; 53': Erster Planetenradträger (des integrierten Planetengetriebes im Ringmotor)
- 54; 54': Verbindungselement (zwischen Planetenträger und Aussenmast)
- 55: Gehäuseboden (Verbindung zwischen Aussenring und erstem Sonnenrad 50)
- 56: Zwischenboden (Verbindung zwischen Aussenring und erstem Sonnenrad 50')
- BS: Batterie-Speichereinheit
- E; E'; E": Elektrischer Antrieb
- H1: Erster Hohlraum (des Getriebegehäuses des Hauptgetriebes)
- H2: Zweiter Hohlraum (des Lagermasts)
- H3: Dritter Hohlraum (des Aussenmasts)
- M: Magnetspalt (zwischen Innenläufer und Aussenring)
- P: Planetenradachse
- PE; PE': Planetengetriebe (des elektrischen Antriebs)
- SEM: Stromerzeugungsmodule
- ST: Steuereinheit
- TK: Zweiter, als thermodynamische Kraftmaschine ausgestalteter Antrieb
- z: Zentrische Achse

## Patentansprüche

1. Drehflügler mit mindestens einem, vorzugsweise eine Vielzahl von elektrischen Antrieben (E) zum Antreiben eines Hauptrotors eines Drehflüglers, insbesondere eines Helikopters, wobei der mindestens eine elektrische Antrieb (E) umfasst:
Mittel zur Kopplung des mindestens einen elektrischen Antriebs (E) mit einem, drehfest mit einer Antriebseinheit eines Helikopterrotorgetriebes (2) koppelbaren, Rotormast (4) zur drehfesten Kopplung mit dem Hauptrotor oder Heckrotor,
wobei der mindestens eine elektrische Antrieb (E) als mindestens ein elektrischer Ringmotor ausgestaltet ist, wobei der mindestens eine elektrische Ringmotor koaxial zum Rotormast (4) angeordnet und angebracht ist,
der Drehflügler mit einem Hybridantrieb (1), umfassend den mindestens einen elektrischen Antrieb (E), sowie:
einen zweiten, als thermodynamische Kraftmaschine ausgestalteten, Antrieb (TK), beispielsweise einen Verbrennungsmotor, Turbinenmotor, Fremdzündungsmotor, Dieselmotor, Brennstoffzellenantrieb oder dergleichen,
**dadurch gekennzeichnet, dass**
der elektrische Antrieb (E) mit dem zweiten, als thermodynamische Kraftmaschine ausgestalteten, Antrieb (TK) mechanisch gekoppelt werden kann, so dass der elektrische Antrieb (E) mit dem zweiten Antrieb (TK) in einem gekoppelten Zustand mitdrehen kann und dadurch der elektrische Antrieb (E) den zweiten Antrieb (TK) beim Antreiben des Hauptrotors oder Heckrotors unterstützen kann beziehungsweise umgekehrt zur Ausbildung eines parallel geschalteten Hybridantriebs (1).

2. Drehflügler nach Patentanspruch 1,
**dadurch gekennzeichnet, dass**
der elektrische Antrieb (E) als elektrischer Ringmotor mit einem als Rotor fungierenden Innenläufer (11) ausgestaltet ist, wobei der Innenläufer (11) direkt mit dem Rotormast (4) fest verbindbar ist.

3. Drehflügler nach Patentanspruch 1,
**dadurch gekennzeichnet, dass**
der elektrische Antrieb (E) als elektrischer Ringmotor mit einem als Rotor fungierenden Aussenläufer ausgestaltet ist, wobei der Aussenläufer fest mit dem Rotormast verbindbar ist.

4. Drehflügler nach Patentanspruch 1 oder 2,
**dadurch gekennzeichnet, dass**
der elektrische Antrieb (E) als elektrischer Ringmotor mit einem integrierten Getriebe ausgestaltet ist zur Kraftübertragung auf den Rotormast (4).

5. Drehflügler nach Patentanspruch 4,
**dadurch gekennzeichnet, dass**
der elektrische Antrieb (E) als elektrischer Ringmotor mit einem integrierten, als Planetengetriebe ausgestalteten Getriebe ausgestaltet ist.

6. Drehflügler nach einem der vorherigen Patentansprüche,
**dadurch gekennzeichnet, dass**
der elektrische Antrieb (E) mechanisch zumindest mit dem Getriebegehäuse (30) des Helikopterrotorgetriebes (2) verbindbar ist, insbesondere indem ein als Stator fungierender Aussenring (10) des elektrischen Antriebs (E) mit dem Getriebegehäuse (30) fest verbindbar ist.

7. Drehflügler nach einem der vorherigen Patentansprüche,
**dadurch gekennzeichnet, dass**
der mindestens eine elektrische Antrieb (E) derart ausgelegt und dimensioniert ist, so dass ein Hauptrotor und / oder Heckrotor eines Drehflüglers, insbesondere eines Helikopters, autark ohne einen zusätzlichen Antrieb antreibbar ist.

8. Drehflügler nach einem der vorherigen Patentansprüche,
**dadurch gekennzeichnet, dass**
die Vielzahl von als elektrische Ringmotoren ausgestaltete Antrieben (E) koaxial zum Rotormast (4) übereinander angeordnet und angebracht ist.

9. Drehflügler nach einem der vorherigen Patentansprüche,
**dadurch gekennzeichnet, dass**
dass der Hybridantrieb (1) eine elektrische Energiequelle, insbesondere eine Batterie-Speichereinheit (BS), umfasst, und wobei der elektrische Antrieb (E) des Hybridantriebs (1) in einem drehfest gekoppelten Zustand zwischen dem elektrischen Antrieb (E) und dem zweiten, als thermodynamische Kraftmaschine ausgestalteten, Antrieb (TK) und während des Betriebs des zweiten Antriebs (TK) der elektrische Antrieb (E) als Generator fungieren kann für eine zusätzliche Energierückgewinnung für die Batterie-Speichereinheit (BS).

10. Drehflügler, insbesondere Helikopter, nach Patentanspruch 9,
**dadurch gekennzeichnet, dass**
im elektronischen Antrieb (E) ein Gleichrichter, insbesondere in Form einer Sperrdiode, vorgesehen ist, wodurch im Nichtbetrieb des elektrischen Antriebs (E) die Batterie-Speichereinheit (BS) aufgeladen werden kann.

11. Drehflügler, insbesondere Helikopter, nach einem der vorherigen Patentansprüche,
**dadurch gekennzeichnet, dass**
der Rotormast (4) zweiteilig ausgestaltet ist und einen Lagermast (5) sowie einen Aussenmast (6) umfasst, wobei der Aussenmast (6) als Hohlkörper ausgestaltet rotierbar um eine zentrische Achse (Z) relativ zum Lagermast (5), den Lagermast (5) konzentrisch umgebend, gelagert ist, und wobei der Aussenmast (6) mit dem Helikopterrotorgetriebe (2) wirkverbindbar ist, wobei der Lagermast (5) ortsfest und drehfest im Drehflügler lagerbar ist, sodass der Aussenmast (6) drehfest mit einem Hauptrotor koppelbar ist und mit dem Helikopterrotorgetriebe (2) in Rotation versetzbar ist.

12. Drehflügler, insbesondere Helikopter, nach Patentanspruch 11,
**dadurch gekennzeichnet, dass**
der Lagermast (5) als Hohlkörper ausgestaltet ist, sodass Bauteile, wie Steuerstangen und/oder Verkabelung, den Lagermast (5) und den Aussenmast (6) in Richtung zentrischer Achse (z) vollständig durchquerend anordbar sind.

13. Drehflügler, insbesondere Helikopter, nach einem der Patentansprüche 11 oder 12,
**dadurch gekennzeichnet, dass**
der Rotormast (4) mit der als Antriebszahnrad (34) ausgestalteten Antriebseinheit drehfest koppelbar ist, wobei das Antriebszahnrad (34) auf dem Lagermast (5) rotierbar lagerbar ist mittels mindestens eines Radiallagers, und mittels eines mit dem Antriebszahnrad (34) drehfest verbundenen, zweiten Sonnenrads (35) eine Rotation von mindestens einem Antriebsplanetenrad (41) an einer dem Antriebszahnrad (34) zugewandten Seite eines jeweiligen zweiten Planetenradträgers (39) um eine jeweilige Planetenradachse (P) erreichbar ist, und wobei mindestens ein, dem mindestens einen Antriebsplanetenrad (41) zugehöriges, ortsfest gelagertes, zweites Planetenrad (40) von einem um die zentrische Achse (z) rotierbaren, innenverzahnten Zahnradring (22) umschlossen ist und zwischen Zahnradring (22) und dem Aussenmast (6) eine Kraftübertragungseinrichtung derart anbringbar oder angeformt ist, so dass ausgehend von einer Rotationsbewegung des Antriebszahnrads (34) der Aussenmast (6) und der mit dem Aussenmast (6) drehfest gekoppelte Hauptrotor in Rotation versetzbar ist.

14. Drehflügler, insbesondere Helikopter, nach einem der Patentansprüche 1 bis 11,
**dadurch gekennzeichnet, dass**
der Drehflügler eine Steuereinheit (ST) sowie eine Leistungselektronik-Einheit (LEE) umfasst,
wobei die Leistungselektronik-Einheit (LEE) mit der Steuereinheit (ST), einer elektrischen Energiequelle, insbesondere eine Batterie-Speichereinheit (BS), und dem elektrischen Antrieb (E) interagieren kann und insbesondere die Leistungselektronik-Einheit (LEE) elektrische Energie von der Energiequelle aufnehmen und in Form von elektrischem Strom an den elektrischen Antrieb (E) weiterleiten kann,
wobei die Steuereinheit (ST) ausgestaltet ist, so dass sie Sensor-Eingabedaten vom zweiten Antrieb (TK), vom elektrischen Antrieb (E), von der Pilotensteuerung, und von der elektrischen Energiequelle aufnehmen kann; und Ausgabedaten an die Leistungselektronik-Einheit (LEE) weiterleiten kann, und
wobei die Steuereinheit (ST) derart mit einer Logik ausgestaltet ist, so dass ausgehend von der Leistungselektronik-Einheit (LEE) die Ausgangsleistung des elektrischen Antriebs (E) abhängig von den Flugbedingungen, vom Flugprofil, vom Batteriestand, sowie von der vom zweiten Antrieb (TK) herrührenden Ausgangsleistung einstellbar ist.

15. Drehflügler, insbesondere Helikopter, nach Patentanspruch 12,
**dadurch gekennzeichnet, dass**
die Logik der Steuereinheit (ST) im Weiteren einen automatischen Moduswechsel zwischen der Drehmomenterzeugung zum Antreiben des Rotors und der zusätzlichen Energierückgewinnung für die Batterie-Speichereinheit (BS) erlaubt.

16. Drehflügler, insbesondere Helikopter, nach Patentanspruch 14,
**dadurch gekennzeichnet, dass**
der Drehflügler zusätzliche, mit dem zweiten Antrieb (TK) mechanisch gekoppelte, Stromerzeugungsmodule (SEM) umfasst zur Aufladung der Batterie-Speichereinheit (BS), wodurch ein seriell ausgebildeter Hybridantrieb (1) erhalten wird.

## Claims

1. Rotorcraft with at least one, preferably a plurality of electric drives (E) for driving a main rotor of a rotorcraft, in particular of a helicopter, wherein the at least one electric drive (E) comprises means for coupling the at least one electric drive (E) to a rotor mast (4), which is configured to be coupled in a rotationally fixed manner to a drive unit of a helicopter rotor transmission (2), for rotationally fixed coupling with the main rotor or tail rotor, wherein the at least one electric drive (E) is designed as at least one electric ring motor, wherein the at least one electric ring motor is arranged and mounted coaxially to the rotor mast (4), the rotorcraft having a hybrid drive (1), comprising the at least one electric drive (E), and:
a second drive designed as a thermodynamic engine (TK), for example an internal combustion engine, turbine engine, sparkignition engine, diesel engine, fuel cell drive or the like,
**characterized in that**
the electric drive (E) is configured to be mechanically coupled to the second drive designed as a thermodynamic engine (TK), so that the electric drive (E) is configured to rotate with the second drive (TK) in a coupled state and thus the electric drive (E) is configured to support the second drive (TK) in driving the main rotor or tail rotor or vice versa to form a hybrid drive (1) connected in parallel.

2. The rotorcraft according to claim 1, **characterized in that** the electric drive (E) is designed as an electric ring motor with an inner rotor (11) functioning as a rotor, wherein the inner rotor (11) is configured to be fixedly connected to the rotor mast (4).

3. The rotorcraft according to claim 1, **characterized in that** the electric drive (E) is designed as an electric ring motor with an outer rotor acting as a rotor, wherein the outer rotor is configured to be fixedly connected to the rotor mast.

4. The rotorcraft according to claim 1 or 2, **characterized in that** the electric drive (E) is designed as an electric ring motor with an integrated gearbox for transmitting power to the rotor mast (4).

5. The rotorcraft according to claim 4, **characterized in that** the electric drive (E) is designed as an electric ring motor with an integrated gearbox designed as a planetary gear.

6. The rotorcraft according to one of the preceding claims, **characterized in that** the electric drive (E) is configured to be mechanically connected at least to the transmission housing (30) of the helicopter rotor transmission (2), in particular **in that** an outer ring (10) of the electric drive (E), functioning as a stator, is configured to be fixedly connected to the transmission housing (30).

7. The rotorcraft according to one of the preceding claims, **characterized in that** the at least one electric drive (E) is designed and dimensioned in such a way that a main rotor and/or tail rotor of a rotorcraft, in particular a helicopter, is configured to be driven independently without an additional drive.

8. The rotorcraft according to one of the preceding claims, **characterized in that** the plurality of drives (E) designed as electric ring motors are arranged and attached above one another coaxially with the rotor mast (4).

9. The rotorcraft according to one of the preceding claims, **characterized in that** the hybrid drive (1) comprises an electrical energy source, in particular a battery storage unit (BS), and wherein the electric drive (E) of the hybrid drive (1), in a rotationally fixed coupled state between the electric drive (E) and the second drive (TK) designed as a thermodynamic engine, and during the operation of the second drive (TK) of the electric drive (E), is configured to function as a generator for additional energy recovery for the battery storage unit (BS).

10. The rotorcraft, in particular helicopter, according to claim 9, **characterized in that** a rectifier, in particular in the form of a blocking diode, is provided in the electric drive (E), whereby the battery storage unit (BS) is configured to be charged when the electric drive (E) is not in operation.

11. The rotorcraft, in particular helicopter, according to one of the preceding claims, **characterized in that** the rotor mast (4) is designed in two parts and comprises a bearing mast (5) and an outer mast (6),
wherein the outer mast (6) is designed as a hollow body mounted rotatable about a central axis (Z) relative to the bearing mast (5), concentrically surrounding the bearing mast (5), and wherein the outer mast (6) is configured to be operatively connected to the helicopter rotor transmission (2),
wherein the bearing mast (5) is configured to be mounted in a stationary and rotationally fixed manner in the rotorcraft, so that the outer mast (6) is configured to be coupled in a rotationally fixed manner to a main rotor and is configured to be set in rotation with the helicopter rotor transmission (2).

12. The rotorcraft, in particular helicopter, according to claim 11, **characterized in that** the bearing mast (5) is designed as a hollow body, so that components, such as control rods and/or cabling, are configured to be arranged completely passing through the bearing mast (5) and the outer mast (6) in the direction of the central axis (z).

13. The rotorcraft, in particular helicopter, according to one of claims 11 or 12, **characterized in that** the rotor mast (4) is configured to be coupled in a rotationally fixed manner to the drive unit designed as a drive gearwheel (34),
wherein the drive gearwheel (34) is configured to be mounted rotatably on the bearing mast (5) by means of at least one radial bearing, and a rotation of at least one drive planetary gear (41) on a side of a respective second planetary gear carrier (39) facing the drive gearwheel (34) about a respective planetary gear axis (P) can be achieved by means of a second sun gear (35) nonrotatably connected to the drive gearwheel (34),
wherein at least one stationary second planetary gear (40) belonging to the at least one drive planetary gear (41) is enclosed by an internally toothed gear ring (40) which is configured to be rotated about the central axis (z), and a power transmission device configured to be attached or molded between the gearwheel ring (22) and the outer mast (6) in such a way that, starting from a rotational movement of the drive gearwheel (34), the outer mast (6) and the main rotor coupled in a rotationally fixed manner to the outer mast (6) can be set in rotation.

14. The rotorcraft, in particular helicopter, according to one of claims 1 to 11, **characterized in that** the rotorcraft comprises a control unit (ST) and a power electronics unit (LEE),
wherein the power electronics unit (LEE) is configured to interact with the control unit (ST), an electrical energy source, in particular a battery storage unit (BS), and the electric drive (E), and in particular the power electronics unit (LEE) is configured to take electrical energy from the energy source and relay the latter in the form of electric current to the electric drive (E),
wherein the control unit (ST) is configured such that it can pick up sensor input data from the second drive (TK), from the electric drive (E), from the pilot control, and from the electric energy source; and can forward output data to the power electronics unit (LEE), and
wherein the control unit (ST) is designed with logic, so that, starting from the power electronics unit (LEE), the output power of the electric drive (E) can be set depending on the flight conditions, the flight profile, the battery level, and the output power originating from the second drive (TK).

15. The rotorcraft, in particular helicopter, according to claim 12, **characterized in that** the logic of the control unit (ST) further allows an automatic mode change between the torque generation for driving the rotor and the additional energy recovery for the battery storage unit (BS).

16. The rotorcraft, in particular helicopter, according to claim 14, **characterized in that** the rotorcraft comprises additional power generation modules (SEM), which are mechanically coupled to the second drive (TK), for charging the battery storage unit (BS), whereby a serially designed hybrid drive (1) is obtained.

## Revendications

1. Giravion avec au moins un, de préférence plusieurs entraînement(s) électrique(s) (E) pour entraîner un rotor principal d'un giravion, en particulier d'un hélicoptère, dans lequel l'au moins un entraînement électrique (E) comprend
des moyens pour coupler l'au moins un entraînement électrique (E) à un mât de rotor (4), qui est configuré pour être couplé de manière fixe en rotation à une unité d'entraînement d'une transmission rotor d'hélicoptère (2), pour un couplage fixe en rotation au rotor principal ou au rotor de queue,
dans lequel l'au moins un entraînement électrique (E) est conçu comme au moins un moteur annulaire électrique, dans lequel l'au moins un moteur annulaire électrique est disposé et monté coaxialement au mât du rotor (4),
le giravion possède un entraînement hybride (1), comprenant l'au moins un entraînement électrique (E), et :
un second entraînement conçu comme un moteur thermodynamique (TK), par exemple un moteur à combustion interne, un moteur à turbine, un moteur à allumage commandé, un moteur diesel, un entraînement par pile à combustible ou similaire,
**caractérisé en ce que**
l'entraînement électrique (E) est configuré pour être couplé mécaniquement au second entraînement conçu comme un moteur thermodynamique (TK), de sorte que l'entraînement électrique (E) est configuré pour tourner avec le second entraînement (TK) dans un état couplé et ainsi l'entraînement électrique (E) est configuré pour soutenir le second entraînement (TK) dans l'entraînement du rotor principal ou du rotor de queue ou vice versa pour former un entraînement hybride (1) connecté en parallèle.

2. Giravion selon la revendication 1, **caractérisé en ce que** l'entraînement électrique (E) est conçu comme un moteur annulaire électrique avec un rotor intérieur (11) fonctionnant comme un rotor, dans lequel le rotor intérieur (11) est configuré pour être relié de manière fixe au mât du rotor (4).

3. Giravion selon la revendication 1, **caractérisé en ce que** l'entraînement électrique (E) est conçu comme un moteur annulaire électrique avec un rotor extérieur fonctionnant comme un rotor, dans lequel le rotor extérieur est configuré pour être relié de manière fixe au mât du rotor.

4. Giravion selon la revendication 1 ou 2, **caractérisé en ce que** l'entraînement électrique (E) est conçu comme un moteur annulaire électrique avec une boîte de vitesses intégrée pour transmettre la puissance au mât du rotor (4).

5. Giravion selon la revendication 4, **caractérisé en ce que** l'entraînement électrique (E) est conçu comme un moteur annulaire électrique avec une boîte vitesses intégrée conçue comme un engrenage planétaire.

6. Giravion selon l'une des revendications précédentes, **caractérisé en ce que** l'entraînement électrique (E) est configuré pour être relié mécaniquement au moins au carter de transmission (30) de la transmission rotor d'hélicoptère (2), en particulier **en ce qu'**un anneau extérieur (10) de l'entraînement électrique (E), fonctionnant comme un stator, est configuré pour être relié de manière fixe au carter de transmission (30).

7. Giravion selon l'une des revendications précédentes, **caractérisé en ce que** l'au moins un entraînement électrique (E) est conçu et dimensionné de telle sorte qu'un rotor principal et/ou un rotor de queue d'un giravion, en particulier d'un hélicoptère, est configuré pour être entraîné indépendamment sans entraînement supplémentaire.

8. Giravion selon l'une des revendications précédentes, **caractérisé en ce que** la pluralité d'entraînements (E) conçus comme des moteurs annulaires électriques sont disposés et fixés les uns au-dessus des autres de manière coaxiale avec le mât du rotor (4).

9. Giravion selon l'une des revendications précédentes, **caractérisé en ce que** l'entraînement hybride (1) comprend une source d'énergie électrique, en particulier une unité de stockage de batterie (BS), et dans lequel l'entraînement électrique (E) de l'entraînement hybride (1), dans un état de couplage fixe en rotation entre l'entraînement électrique (E) et le second entraînement (TK) conçu comme un moteur thermodynamique, et pendant le fonctionnement du second entraînement (TK) de l'entraînement électrique (E), est configuré pour fonctionner comme un générateur pour la récupération d'énergie supplémentaire pour l'unité de stockage de la batterie (BS).

10. Giravion, en particulier hélicoptère, selon la revendication 9, **caractérisé en ce qu'**un redresseur, en particulier sous la forme d'une diode de blocage, est prévu dans l'entraînement électrique (E), l'unité de stockage de la batterie (BS) étant configurée pour être chargée lorsque l'entraînement électrique (E) n'est pas en fonctionnement.

11. Giravion, notamment hélicoptère, selon l'une des revendications précédentes, **caractérisé en ce que** le mât de rotor (4) est conçu en deux parties et comprend un mât porteur (5) et un mât extérieur (6), dans lequel le mât extérieur (6) est conçu comme un corps creux monté de manière rotative autour d'un axe central (Z) par rapport au mât porteur (5), entourant concentriquement le mât porteur (5), et dans lequel le mât extérieur (6) est configuré pour être relié de manière opérationnelle à la transmission rotor d'hélicoptère (2), dans lequel le mât porteur (5) est configuré pour être monté de manière stationnaire et fixe en rotation dans le giravion, de sorte que le mât extérieur (6) est configuré pour être couplé de manière fixe en rotation à un rotor principal et est configuré pour être mis en rotation avec la transmission rotor extérieur (2) de l'hélicoptère.

12. Giravion, en particulier hélicoptère, selon la revendication 11, **caractérisé en ce que** le mât porteur (5) est conçu comme un corps creux, de sorte que les composants, tels que les tiges de commande et/ou le câblage, sont configurés pour être disposés en traversant complètement le mât porteur (5) et le mât extérieur (6) dans la direction de l'axe central (z).

13. Giravion, en particulier hélicoptère, selon l'une des revendications 11 ou 12, **caractérisé en ce que** le mât de rotor (4) est configuré afin d'être couplé de manière fixe en rotation à l'unité d'entraînement conçue comme une roue dentée d'entraînement (34),
dans lequel la roue dentée d'entraînement (34) est configurée pour être montée de manière rotative sur le mât de support (5) au moyen d'au moins un roulement radial, et une rotation d'au moins un engrenage planétaire d'entraînement (41) sur un côté d'un second support d'engrenage planétaire respectif (39) faisant face à la roue dentée d'entraînement (34) autour d'un axe d'engrenage planétaire respectif (P) peut être réalisée au moyen d'un second pignon solaire (35) relié de manière non rotative à la roue dentée d'entraînement (34),
et un dispositif de transmission de puissance configuré pour être fixé ou moulé entre la couronne dentée (22) et le mât extérieur (6) de manière à ce que, à partir d'un mouvement de rotation de la roue dentée d'entraînement (34), le mât extérieur (6) et le rotor principal couplé de manière fixe en rotation au mât extérieur (6) puissent être mis en rotation.

14. Giravion, notamment hélicoptère, selon l'une des revendications 1 à 11, **caractérisé en ce que** le giravion comprend une unité de commande (ST) et une unité électronique de puissance (LEE), dans lequel l'unité électronique de puissance (LEE) est configurée pour interagir avec l'unité de commande (ST), une source d'énergie électrique, en particulier une unité de stockage de batterie (BS), et l'entraînement électrique (E), et en particulier l'unité électronique de puissance (LEE) est configurée pour prélever de l'énergie électrique de la source d'énergie et relayer cette dernière sous forme de courant électrique à l'entraînement électrique (E),
dans lequel l'unité de commande (ST) est configurée de manière à pouvoir capter les données d'entrée des capteurs du second entraînement (TK), de l'entraînement électrique (E), de la commande pilote et de la source d'énergie électrique ; et à pouvoir transmettre les données de sortie à l'unité électronique de puissance (LEE), et
dans lequel l'unité de commande (ST) est conçue avec une logique, de sorte que, à partir de l'unité électronique de puissance (LEE), la puissance de sortie de l'entraînement électrique (E) est réglable en fonction des conditions de vol, du profil de vol, du niveau de la batterie et de la puissance de sortie provenant du second entraînement (TK).

15. Giravion, en particulier hélicoptère, selon la revendication 12, **caractérisé en ce que** la logique de l'unité de commande (ST) permet en outre un changement de mode automatique entre la génération de couple pour l'entraînement du rotor et la récupération d'énergie supplémentaire pour l'unité de stockage de la batterie (BS).

16. Giravion, en particulier hélicoptère, selon la revendication 14, **caractérisé en ce que** le giravion comprend des modules de production d'énergie supplémentaires (SEM), qui sont couplés mécaniquement au second entraînement (TK), pour charger l'unité de stockage de batterie (BS), ce qui permet d'obtenir un entraînement hybride (1) conçu en série.
